# EUROPEAN PATENT SPECIFICATION

(11) **EP 3 041 188 B1**
(45) Date of publication and mention of the grant of the patent: **27.11.2019**
(21) Application number: 14774282.9
(22) Date of filing: 17.02.2014
(51) Int. Cl.: H04L 29/08, H04L 29/06, G06Q 30/02, G06Q 20/04, G06Q 30/06

(54) **METHOD, DEVICE AND SYSTEM FOR CONTROLLING PRESENTATION OF APPLICATION**
VERFAHREN, VORRICHTUNG UND SYSTEM ZUR STEUERUNG DER DARSTELLUNG EINER ANWENDUNG
PROCÉDÉ, DISPOSITIF ET SYSTÈME POUR COMMANDER LA PRÉSENTATION D'UNE APPLICATION

(30) Priority: 28.08.2013 CN 201310381726
(43) Date of publication of application: 06.07.2016
(73) Proprietor: ZTE Corporation, Shenzhen, Guangdong 518057 (CN)
(72) Inventor: XU, Hui, Shenzhen Guangdong 518057 (CN); ZHANG, Quan, Shenzhen Guangdong 518057 (CN)
(74) Representative: Herzog IP Patentanwalts GmbH
(86) International application number: PCT/CN2014/072166
(87) International publication number: WO 2014/154063

(56) References cited:
- WO-A2-2012/166940
- CN-A- 1 421 788
- CN-A- 101 989 992
- CN-A- 102 999 711
- CN-A- 103 248 495
- US-A- 5 903 880
- US-A1- 2006 213 985
- US-A9- 2011 060 904
- Anonymous: "Can a gift card be made valid only for a specific app? - Apple", apple, 22 August 2013 (2013-08-22), XP055281232, Retrieved from the Internet: URL:http://www.apple.com/shop/question/ans wers/readonly/can-a-gift-card-be-made-vali d-only-for-a-specific-app/QPJKTAXK2KFAXKHX A [retrieved on 2016-06-16]
- HYOUNGSHICK KIM ED - ALIREZA SEYEDI ET AL: "N-Times Consumable Digital Ticket and Its Application to Content Access Service", CONSUMER COMMUNICATIONS AND NETWORKING CONFERENCE, 2007. CCNC 2007. 20 07 4TH IEEE, IEEE, PI, 1 January 2007 (2007-01-01), pages 140-144, XP031087766, ISBN: 978-1-4244-0667-8

## Description

### TECHNICAL FIELD

The disclosure relates to the technology of applications (APPs), and in particular to a method, device and system for controlling application gifting.

### BACKGROUND

Since Apple Inc. developed APP Store, various types of APPs emerge one after another and the number of APPs increases rapidly, APPs are accepted gradually by users having a cell phone or any kinds of mobile terminals, and downloading and exchanging APPs becomes part of lives and interests for mobile terminal users such as mobile phone users and tablet users. In the era of social networking, it is fashionable to give an APP as a gift to other person, and an APP provider may gift an APP to some users for a trial so as to promote the APP.

Currently, APP gifting may be implemented as follows. A giver logins in an APP gifting system of an APP store via a client, searches and selects an APP desired to be gifted via a user interface, and submits a purchase request to the APP presenting system; the APP gifting system receives the purchase request sent by the giver, determines information of the APP to be gifted, and generates a redemption code of the APP and sends it to the giver, the giver then sends the redemption code of the APP to a recipient; after receiving the redemption code of the APP gifted by the giver, the recipient logins in the APP gifting system via a client, inputs the redemption code of the APP via a user interface, and then he/she can download the APP gifted by the giver free of charge. In this way, although it is simple and feasible to gift an APP, confidentiality cannot be assured using this APP gifting solution, since the gifted APP is easy to be illegally downloaded, spread and used by unauthorized users, therefore copyright of the APP cannot be protected well, in particular, usage times of the APP cannot be effectively controlled, and thus usage permission of the gifted APP cannot be controlled well.

### SUMMARY

In order to resolve existing technical problems, embodiments of the disclosure mainly provide a method, device and system for controlling application gifting.

The technical solutions of the embodiments of the disclosure are implemented as follows.

The embodiments of the disclosure provide a method for controlling application gifting, which includes:
a first client sends a purchase request carrying allowed usage times of an APP to a server;
the server searches out the APP according to the purchase request, generates a random code corresponding to the APP, and stores, in a storage of the server, the random code as the redemption code of the APP in one-to-one correspondence with the allowed usage times carried in the purchase request, and returns the redemption code of the APP to the first client;
the server performs an encryption process on the APP by using Digital Right Management technology;
the first client sends the redemption code of the APP to a second client; and
the server receives a redemption request carrying the redemption code of the APP sent by the second client, and sends download information of the APP carrying decryption information of the APP to the second client after it is determined the redemption code of the APP in the redemption request is consistent with one of the redemption codes of the APPs stored in the storage of the server and the current used times of the APP corresponding to the redemption code of the APP is not greater than the allowed usage times set by the first client.

In an embodiment, the purchase request may further include a name or identification of the APP.

In an embodiment, the method may further include: the second client receives the download information from the server, downloads the APP according to the received download information, and decrypts the APP according to the decryption information of the APP carried in the download information after downloading the APP.

The embodiments of the disclosure provide a server including a purchase processing module and a redemption module, in which:
the purchase processing module is configured to receive a purchase request carrying allowed usage times of an APP sent by a first client, search out the APP according to the purchase request, generate a random code corresponding to the APP, and store, in a storage of the server, the random code as the redemption code of the APP in one-to-one correspondence with the allowed usage times carried in the purchase request, and return the redemption code of the APP to the first client through a purchase response message, and perform an encryption process on the APP by using Digital Right Management technology; and
the redemption module is configured to receive a redemption request carrying a redemption code of the APP sent by a second client, and send download information of the APP carrying decryption information of the APP to the second client after it is determined the redemption code of the APP in the redemption request is consistent with one of the redemption codes of the APPs stored in the storage of the server and the current used times of the APP corresponding to the redemption code of the APP is not greater than the allowed usage times set by the first client.

The embodiments of the disclosure further provide a system for controlling application gifting, and the system includes a first client, a server and a second client, in which:
the first client comprises:
   a setting module, configured to set allowed usage times of an APP to be gifted and send the allowed usage times of the APP to a purchase requesting module;
   the purchase requesting module, configured to receive the allowed usage times of the APP sent by the setting module, and send a purchase request carrying the allowed usage times of the APP to the server, receive a redemption code of the APP returned by the server and send the redemption code of the APP to the second client;
the server is a server described above; and
the second client includes a redemption requesting module and a download module, in which:
   the redemption requesting module is configured to receive the redemption code of the APP sent from the first client, the first client receiving the redemption code of the APP from the server, and send the redemption request carrying the redemption code of the APP to the server; and
   the download module is configured to download the APP according to the download information of the APP, and send a response message indicating successful download to the server after the APP is downloaded successfully.

In an embodiment, the download module may be further configured to decrypt the downloaded APP according to the decryption information of the APP carried in the download information.

The embodiments of the disclosure provide a method, device and system for controlling APP gifting, in which: a first client sends a purchase request carrying allowed usage times of an APP to a server; the server generates a redemption code of the APP according to the purchase request, stores a correspondence between the redemption code of the APP and the allowed usage times, and returns the redemption code of the APP to the first client; the first client sends the redemption code of the APP to a second client; and the server receives a redemption request carrying the redemption code of the APP sent by the second client, and sends download information of the APP to the second client after it is determined according to the allowed usage times corresponding to the redemption code of the APP that a redemption operation is allowed. In this way, usage times of an APP can be limited effectively when the APP is gifted, thereby controlling the usage permission of the gifted APP well enough.

### BRIEF DESCRIPTION OF THE DRAWINGS

Fig. 1 is a schematic flow chart of a method for controlling APP gifting according to an embodiment of the disclosure;
Fig. 2 is a schematic structural diagram of a client according to an embodiment of the disclosure;
Fig. 3 is a schematic structural diagram of a server according to an embodiment of the disclosure; and
Fig. 4 is a schematic structural diagram of a system for controlling APP gifting according to an embodiment of the disclosure.

### DETAILED DESCRIPTION

In the embodiments of the disclosure, a first client sends a purchase request carrying allowed usage times of an APP to a server; the server generates a redemption code of the APP according to the purchase request, stores a correspondence between the redemption code of the APP and the allowed usage times, and returns the redemption code of the APP to the first client; the first client sends the redemption code of the APP to a second client; and the server receives a redemption request carrying the redemption code of the APP sent by the second client, and sends download information of the APP to the second client after it is determined according to the allowed usage times corresponding to the redemption code of the APP that a redemption operation is allowed.

The disclosure will be further elaborated in connection with specific embodiments with reference to the accompanying drawings.

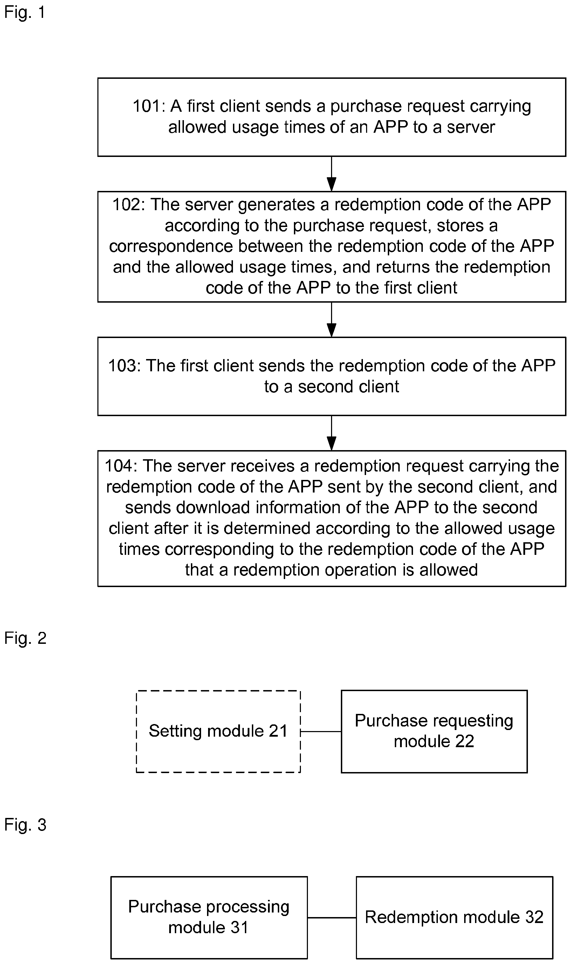

An embodiment of the disclosure implements a method for controlling APP gifting. As shown in Fig. 1, the method includes steps as follows.

Step 101, a first client sends a purchase request carrying allowed usage times of an APP to a server.

Here, the purchase request may further include information such as a name or identification of the APP, and the like.

Before sending the purchase request carrying the allowed usage times of the APP to the server, the first client sets allowed usage times of an APP to be gifted, specifically, after an APP to be purchased is selected by a giver, the first client displays, to the giver, an interface for setting usage times, through which allowed usage times of the purchased APP inputted by the giver is received.

In an application scenario of this step, when an APP provider promotes an APP, allowed usage times of the promoted APP may be set through the first client, and an issuing request carrying the allowed usage times of the APP can be submitted to a server, wherein the issuing request is the purchase request in this step.

Step 102, the server generates a redemption code of the APP according to the purchase request, stores a correspondence between the redemption code of the APP and the allowed usage times, and returns the redemption code of the APP to the first client;
specifically, the server searches out the APP according to the purchase request, generates a random code corresponding to the APP, stores, in a storage of the server, the random code as the redemption code of the APP in one-to-one correspondence with the allowed usage times carried in the purchase request, and returns the redemption code of the APP to the first client through a purchase response message.

This step further includes: after the purchase request is received, the server searches out the APP according to the purchase request, and performs an encryption process on the APP;
specifically, the encryption process performed on the APP may be an encryption process performed on the APP using a conventional encryption technology, a packet encryption technology, a sequence encryption technology, or a Digital Right Management (DRM) encryption technology and the like.

For example, the encryption process performed on the APP using the DRM technology may include: the APP file is encrypted and compressed using a standard Open Mobile Alliance (OMA) Digital Right Management (DRM) v1 DRM Content Format (DCF) encryption suite, and a DRM encrypted-and-compressed file containing an encrypted information header is generated, which is referred to as a DRM_APP file.

Specifically, the an encrypted information header of the DRM_APP file includes a key identification (ID) and a digital authorization centre download address (URL);
The allowed usage times of the APP is written in a COUNT field of attributes of the DRM_APP file.

Step 103, the first client sends the redemption code of the APP to a second client;
specifically, the first client sends the redemption code of the APP returned by the server to the second client via a wireless network or the Internet.

Step 104, the server receives a redemption request carrying the redemption code of the APP sent by the second client, and sends download information of the APP to the second client after it is determined according to the allowed usage times corresponding to the redemption code of the APP that a redemption operation is allowed;
specifically, after receiving the redemption code of the APP sent from the first client which receives the redemption code of the APP from the server, the second client sends a redemption request carrying the redemption code of the APP to the server; after receiving the redemption request carrying the redemption code of the APP sent by the second client, the server acquires the redemption code of the APP carried in the redemption request, and compares the redemption code of the APP with redemption codes of APPs stored in a storage of the server, when the redemption code of the APP in the redemption request is consistent with none of the redemption codes of the APPs stored in the storage of the server, which indicates that the redemption code of the APP sent by the second client is not right, then subsequent operations are stopped; when the redemption code of the APP in the redemption request is consistent with one of the redemption codes of the APPs stored in the storage of the server, which indicates that the redemption code of the APP sent by the second client is right, then whether a redemption operation is allowed is determined according to the allowed usage times corresponding to the redemption code of the APP, and download information of the APP is sent to the second client if the redemption operation is allowed.

The download information of the APP includes: a name of the APP, a download address of the APP, and the like;
the step that whether redemption operation is allowed is determined according to the allowed usage times corresponding to the redemption code of the APP includes: it is determined whether remaining usage times of the APP corresponding to the redemption code of the APP is greater than zero; if yes, the redemption operation is allowed, otherwise, the redemption operation is not allowed; or
it is determined whether the current used times of the APP corresponding to the redemption code of the APP is greater than the allowed usage times set by the first client; if not, the redemption operation is allowed; if yes, the redemption operation is not allowed; here, the remaining usage times is the difference between the allowed usage times and the current used times.

The step further include: the APP is downloaded by the second client according to the download information of the APP; a response message indicating successful download is returned to the server after the APP is downloaded successfully; and the remaining usage times or the current used times of the APP is modified by the server if the response message indicating successful download is received, specifically, the remaining usage times of the APP is decremented by 1, or the current used times of the APP is incremented by 1.

This step further includes: decryption information of the APP is carried in download information when the download information of the APP is sent by the server to the second client; and the decryption information of the APP includes at least: an encryption technology used during the encryption process performed on the APP and a decryption key.

Correspondingly, the downloaded APP is decrypted by the second client according to the decryption information of the APP carried in the download information;
for example, after encrypting the APP with a DRM technology, the server has a key ID and a digital authority centre download address carried in the download information of the APP which the server sends to the second client; the second client verifies the authority centre according to the key ID and the digital authority centre download address carried in the download information, receives the key of the encrypted APP from the digital authority centre after the verification passes, and decrypts the APP using the key.

In the embodiment, the APP is protected through encryption, thereby effectively preventing malicious theft and spread of an APP by unauthorized users, limiting the usage times of the APP and controlling the usage permission of the APP to be gifted.

In order to implement the above method, an embodiment of the disclosure provides a client, as shown in Fig. 2, the client includes a purchase requesting module 22 configured to send a purchase request carrying allowed usage times of an APP to a server, receive a redemption code of the APP returned by the server, and send the redemption code of the APP to another client.

The client may further include a setting module 21 configured to set allowed usage times of an APP to be gifted, and send the allowed usage times of the APP to the purchase requesting module 22.

In practical applications, the setting module 21 of the client may be implemented by a Central Processing Unit (CPU) of a mobile terminal, and the purchase requesting module 22 of the client may be implemented by a signal transceiver of a mobile terminal.

Specifically, the setting module 21 is configured to display an interface for setting usage times to a giver after an APP to be purchased is selected by the giver, and receive the allowed usage times of the purchased APP inputted by the giver through the interface for setting usage times.

The purchase request may further include information such as a name or identification of the APP, and the like.

The embodiments of the disclosure further provides a server, as shown in Fig. 3, the server includes a purchase processing module 31 and a redemption module 32, in which:
the purchase processing module 31 is configured to receive the purchase request carrying allowed usage times of an APP sent by a first client, generate a redemption code of the APP, store a correspondence between the redemption code of the APP and the allowed usage times, and return the redemption code of the APP to the first client; and
the redemption module 32 is configured to receive a redemption request carrying a redemption code of the APP sent by a second client, and sent download information of the APP to the second client after it is determined according to the allowed usage times corresponding to the redemption code of the APP that a redemption operation is allowed.

Specifically, the purchase processing module 31 is configured to: receive the purchase request carrying the allowed usage times of the APP sent by the first client, search out the APP according to the purchase request, generate a random code corresponding to the APP, store, in a storage of the server, the random code as the redemption code of the APP in one-to-one correspondence with the allowed usage times carried in the purchase request, and return the redemption code of the APP to the first client through a purchase response message;
the purchase processing module 31 is further configured to, after receiving the purchase request carrying the allowed usage times of the APP sent by the first client, search out the APP according to the purchase request, and perform an encryption process on the APP;
the purchase processing module 31 is further configured to perform an encryption process on the APP using a conventional encryption technology, a packet encryption technology, a sequence encryption technology, or a DRM encryption technology or the like;
for example, the APP file is encrypted and compressed by the purchase processing module 31 using a standard OMA DRM v1 DCF encryption suite, and then a DRM encrypted-and-compressed file containing an encrypted information header is generated, which is referred to as a DRM_APP file for short; the an encrypted information header of the DRM_APP file includes a key identification (ID) and a digital authorization centre download address; the allowed usage times of the APP is written in a COUNT field of attributes of the DRM_APP file.

Specifically, the redemption module 32 is configured to: after receiving the redemption request carrying the redemption code of the APP sent by the second client, acquire the redemption code of the APP carried in the redemption request, compare the redemption code of the APP with redemption codes of APPs stored in a storage, stop subsequent operations and send an error information report to the second client when the redemption code of the APP in the redemption request is consistent with none of the redemption codes of the APPs stored in the storage of the server, and determine whether a redemption operation is allowed according to the allowed usage times corresponding to the redemption code of the APP when the redemption code of the APP in the redemption request is consistent with one of the redemption codes of the APPs stored in the storage of the server, and send the download information of the APP to the second client when the redemption operation is allowed.

Further, the redemption module 32 is configured to: determine whether remaining usage times of the APP corresponding to the redemption code of the APP is greater than zero; if yes, allow the redemption operation, otherwise, forbid the redemption operation; or determine whether the current used times of the APP corresponding to the redemption code of the APP is greater than the allowed usage times set by the first client, if not, allow the redemption operation; if yes, forbid the redemption operation.

The redemption module 32 is further configured to, when sending the download information of the APP to the second client, have the decryption information of the APP carried in the download information; the decryption information of the APP includes at least: an encryption technology used and a decryption key; and
the redemption module 32 is further configured to, after the APP is downloaded successfully, decrement the remaining usage times of the APP by 1, or increment the current used times of the APP by 1.

In practical applications, the purchase processing module 31 and the redemption module 32 of the server may be implemented by a CPU of the server.

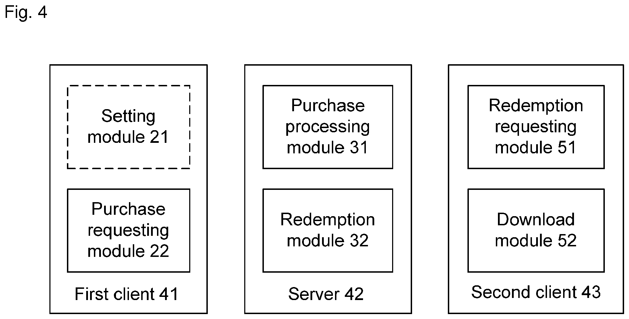

Further, an embodiment of the disclosure further provides a system for controlling application gifting, as shown in Fig. 4, the system includes: a first client 41, a server 42, and second client 43; in which: the first client 41 is the client shown in Fig. 2, including a purchase requesting module 22; the server 42 is the server shown in Fig. 3, including a purchase processing module 31 and a redemption module 32; and the second client 43 includes a redemption requesting module 51 and a download module 52.

The redemption requesting module 51 is configured to receive the redemption code of the APP sent from the first client, the first client receiving the redemption code of the APP from the server, and send the redemption request carrying the redemption code of the APP to the server; and
the download module 52 is configured to download the APP according to the download information of the APP, and send a response message indicating successful download to the server after the APP is downloaded successfully.

In practical applications, the redemption requesting module 51 and the download module 52 may be implemented by a CPU, a Digital Signal Processor (DSP) or a Field-Programmable Gate Array (FPGA) of the second client 43.

The first client 41 further includes a setting module 21 configured to set allowed usage times of an APP to be gifted, and send the allowed usage times of the APP to the purchase requesting module 22.

The download module 52 is further configured to: decrypt the downloaded APP according to the decryption information of the APP carried in the download information; for example, after the APP is encrypted with a DRM technology by the server, the download module 52 verifies the authority centre according to a key ID and a digital authority centre download address carried in the download information, receives the key of the encrypted APP from the digital authority centre after the verification passes, and decrypts the APP using the key.

The technical solution of the disclosure will be explained below in conjunction with specific embodiments.

### First embodiment

In the embodiment, firstly, an APP desired to be gifted is selected by a giver A through a first client such as a mobile phone client or a web page client or the like, and then usage times of the APP is set using an interface for setting usage times, the allowed usage times for the purchased APP inputted by the presenter is received by the first client through the interface for setting usage times, and a purchase request carrying allowed the usage times of the APP is sent to a server;
the server receives the purchase request from the first client, searches out the APP according to the purchase request, generates a random code corresponding to the APP, stores, in a storage of the server, the random code as the redemption code of the APP in one-to-one correspondence with the allowed usage times carried in the purchase request, and returns the redemption code of the APP to the first client through a purchase response message; further, after receiving the purchase request, the server searches out the APP according to the purchase request and performs an encryption process on the APP;
the redemption code of the APP returned by the server is sent by the giver A using the first client to a second client of a recipient B via a wireless network or Internet;
a redemption request carrying the redemption code of the APP is sent by the second client of the recipient B to the server after the reception of the redemption code of the APP returned by the server which is sent by the first client; the redemption code of the APP carried in the redemption request is acquired by the server after the reception of the redemption request carrying the redemption code of the APP sent by the second client, and the redemption code of the APP is compared with redemption codes of APPs stored in a storage of the server, when the redemption code of the APP in the redemption request is consistent with none of the redemption codes of the APPs stored in the storage of the server, which indicates that the redemption code of the APP sent by the second client is not right, then subsequent operations are stopped, and an error information report is sent to the second client; when the redemption code of the APP in the redemption request is consistent with one of the redemption codes of the APPs stored in the storage of the server, which indicates that the redemption code of the APP sent by the second client is right, then it is determined whether remaining usage times of the APP corresponding to the redemption code of the APP is greater than, if yes, the redemption operation is allowed, otherwise, the redemption operation is not allowed; or
it is determined whether the current used times of the APP corresponding to the redemption code of the APP is greater than the allowed usage times set by the first client; if not, the redemption operation is allowed; if yes, the redemption operation is not allowed; here, the remaining usage times is the difference between the allowed usage times and the current used times; download information of the APP is sent to the second client when the redemption operation is allowed.

The APP is downloaded and decrypted by the second client according to the download information of the APP; a response message indicating successful download is returned to the server after the APP is downloaded successfully; the remaining usage times or the current used times of the APP is modified by the server after the response message indicating successful download is received by the server, specifically, remaining usage times of the APP is decremented by 1, or the current used times of the APP is incremented by 1.

### Second embodiment

In the embodiment, when an APP provider promotes an APP, an APP desired to be promoted is selected by the APP provider through a first client such as a mobile phone client or a web page client or the like, and then usage times of the APP is set using an interface for setting usage times, the allowed usage times for the promoted APP inputted by the presenter is received by the first client through the interface for setting usage times, and an issuing request carrying the allowed the usage times of the APP is sent to a server;
the issuing request from the first client is received by the server, the APP is searched out according to the issuing request, a random code corresponding to the APP is generated, the random code is stored in a storage of the server as a redemption code of the APP in one-to-one correspondence with the allowed usage times carried in the issuing request, and the redemption code of the APP is returned to the first client through an issuing response message; further, after the issuing request is received, the APP is searched out according to the issuing request by the server and an encryption process is performed on the APP;
the redemption code of the APP returned by the server is sent by the first client to another client via a wireless network or Internet;
a redemption request carrying the redemption code of the APP is sent by the another client to the server after the reception of the redemption code of the APP returned by the server which is sent by the first client; the redemption code of the APP carried in the redemption request is acquired by the server after the reception of the redemption request carrying the redemption code of the APP sent by the another client, and the redemption code of the APP is compared with redemption codes of APPs stored in a storage of the server, when the redemption code of the APP in the redemption request is consistent with none of the redemption codes of the APPs stored in the storage of the server, which indicates that the redemption code of the APP sent by the another client is not right, then subsequent operations are stopped, and an error information report is sent to the another client; when the redemption code of the APP in the redemption request is consistent with one of the redemption codes of the APPs stored in the storage of the server, which indicates that the redemption code of the APP sent by the another client is right, then it is determined whether remaining usage times of the APP corresponding to the redemption code of the APP is greater than, if yes, the redemption operation is allowed, otherwise, the redemption operation is not allowed; or
it is determined whether the current used times of the APP corresponding to the redemption code of the APP is greater than the allowed usage times set by the first client; if not, the redemption operation is allowed; if yes, the redemption operation is not allowed; here, the remaining usage times is the difference between the allowed usage times and the current used times; download information of the APP is sent to the another client when the redemption operation is allowed.

The APP is downloaded and decrypted by the another client according to the download information of the APP; a response message indicating successful download is returned to the server if the APP is downloaded successfully; the remaining usage times or the current used times of the APP is modified by the server, after the response message indicating successful download is received by the server, specifically, remaining usage times of the APP is decremented by 1, or the current used times of the APP is incremented by 1.

In summary, with the solutions of the embodiments of the disclosure, not only the usage times of an APP is limited, but also the APP is protected through encryption, thereby effectively preventing malicious theft and spread by unauthorized users.

It should be understood by those skilled in the art that embodiments of the disclosure may provide a method, a system, or a computer program product. Accordingly, the disclosure can take the form of hardware embodiments, software embodiments, or a combination of forms of embodiment of software and hardware aspects. Furthermore, the disclosure may take the form of a computer program product which is embodied on one or more computer-usable storage media (including, but not limited to, a disk storage, optical storage, and the like) having computer-usable program code embodied therein.

The disclosure is described in accordance with a method, a device (system), and flow charts and/or block diagrams of a program product according to embodiments of the disclosure. It should be understood that each process and/or block in the flowcharts and/or block diagrams, and a combination of flows and blocks in the flowcharts and / or block diagrams are implemented by the computer program instructions.These computer program instructions may be provided to a processor of a general purpose computer, a special purpose computer, an embedded processor or other programmable data processing apparatus to produce a machine, such that a device for implementing the functions specified in a flow or flows of flowcharts or a block or blocks of block diagrams is produced through the instructions which are executed through the processor of the computer or other programmable data processing device.

These computer program instructions may also be stored in a computer readable memory that can direct a computer or other programmable data processing apparatus to be operated in a particular manner, such that the instructions stored in the computer readable memory produce an article of manufacture including instruction means which implement the function in a flow or flows of flowcharts or a block or blocks of block diagrams.

These computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in a flow or flows of flowcharts or a block or blocks of block diagrams.

What described above is merely preferable embodiments of the disclosure and is not intended to limit the scope of protection of the disclosure.

## Claims

1. A method for controlling application gifting, comprising:
sending, by a first client, a purchase request carrying allowed usage times of an application, APP, to a server;
searching out the APP, by the server, according to the purchase request, generating a random code corresponding to the APP, and storing, in a storage of the server, the random code as the redemption code of the APP in one-to-one correspondence with the allowed usage times carried in the purchase request, and returning, by the server, the redemption code of the APP to the first client;
performing, by the server, an encryption process on the APP by using Digital Right Management technology;
sending, by the first client, the redemption code of the APP to a second client;
receiving, by the server, a redemption request carrying the redemption code of the APP sent by the second client, and
sending, by the server, download information of the APP carrying decryption information of the APP to the second client after it is determined that the redemption code of the APP in the redemption request is consistent with one of the redemption codes of the APPs stored in the storage of the server and the current used times of the APP corresponding to the redemption code of the APP is not greater than the allowed usage times set by the first client.

2. The method according to claim 1, wherein the purchase request further comprises a name or identification of the APP.

3. The method according to claim 1, further comprising:
receiving, by the second client, the download information from the sever;
downloading, by the second client, the APP according to the received download information; and
decrypting, by the second client, the APP according to the decryption information of the APP carried in the download information after downloading the APP.

4. A server, comprising a purchase processing module and a redemption module, wherein
the purchase processing module is configured to receive a purchase request carrying allowed usage times of an APP sent by a first client, search out the APP according to the purchase request, generate a random code corresponding to the APP, and store, in a storage of the server, the random code as the redemption code of the APP in one-to-one correspondence with the allowed usage times carried in the purchase request, return the redemption code of the APP to the first client through a purchase response message, and perform an encryption process on the APP by using Digital Right Management technology; and
the redemption module is configured to receive a redemption request carrying the redemption code of the APP sent by a second client, and send download information of the APP carrying decryption information of the APP to the second client after it is determined that the redemption code of the APP in the redemption request is consistent with one of the redemption codes of the APPs stored in the storage of the server and the current used times of the APP corresponding to the redemption code of the APP is not greater than the allowed usage times set by the first client.

5. A system for controlling application gifting, comprising: a first client, a server, and a second client, wherein
the first client comprises:
a setting module, configured to set allowed usage times of an APP to be gifted and send the allowed usage times of the APP to a purchase requesting module;
the purchase requesting module, configured to receive the allowed usage times of the APP sent by the setting module, and send a purchase request carrying the allowed usage times of the APP to the server, receive a redemption code of the APP returned by the server and send the redemption code of the APP to the second client;
the server is a server according to claim 4; and
the second client comprises a redemption requesting module and a download module, wherein
the redemption requesting module is configured to receive the redemption code of the APP sent from the first client, the first client receiving the redemption code of the APP from the server, and send the redemption request carrying the redemption code of the APP to the server; and
the download module is configured to download the APP according to the download information of the APP, and send a response message indicating successful download to the server after the APP is downloaded successfully.

6. The system according to claim 5, wherein the download module is further configured to decrypt the downloaded APP according to the decryption information of the APP carried in the download information.

## Patentansprüche

1. Verfahren zum Steuern eines Verschenkens einer Anwendung (Englisch: application), umfassend:
Senden einer Kaufanfrage, die erlaubte Nutzungszeiten einer Anwendung, APP, mitführt, von einem ersten Client an einen Server;
Heraussuchen der APP durch den Server gemäß der Kaufanfrage, Erzeugen eines Zufallscodes, welcher der APP entspricht, und Speichern in einem Speicher des Servers, des Zufallscodes als den Rücknahmecode der APP in einer Eins-zu-Eins-Entsprechung mit den erlaubten Nutzungszeiten, die in der Kaufanfrage mitgeführt werden, und Zurücksenden des Rücknahmecodes der APP von dem Server an den ersten Client;
Ausführen eines Verschlüsselungsprozesses an der APP durch den Server, indem eine Technologie einer digitalen Rechteverwaltung verwendet wird;
Senden des Rücknahmecodes der APP von dem ersten Client an einen zweiten Client;
Empfangen in dem Server einer Rücknahmeanfrage, die den Rücknahmecode der APP mitführt, die von dem zweiten Client gesendet wurde, und
Senden von Download-Informationen der APP, die Entschlüsselungsinformationen der APP mitführen, von dem Server an den zweiten Client, nachdem ermittelt wurde, dass der Rücknahmecode der APP in der Rücknahmeanfrage übereinstimmt mit einem der Rücknahmecodes der APPs, die in dem Speicher des Servers gespeichert sind, und dass die aktuell genutzten Zeiten der APP, die dem Rücknahmecode der APP entsprechen, nicht größer als die erlaubten Nutzungszeiten sind, die von dem ersten Client eingestellt wurden.

2. Verfahren nach Anspruch 1, wobei die Kaufanfrage außerdem einen Namen oder eine Kennung der APP umfasst.

3. Verfahren nach Anspruch 1, das außerdem umfasst:
Empfangen in dem zweiten Client der Download-Informationen von dem Server;
Herunterladen der APP durch den zweiten Client gemäß den empfangenen Download-Informationen; und
Entschlüsseln der APP durch den zweiten Client nach dem Herunterladen der APP gemäß den Entschlüsselungsinformationen der APP, die in den Download-Informationen mitgeführt werden.

4. Server, der ein Kaufverarbeitungsmodul und ein Rücknahmemodul umfasst, wobei
das Kaufverarbeitungsmodul konfiguriert ist zum Empfangen einer Kaufanfrage, die erlaubte Nutzungszeiten einer APP mitführt, die von einem ersten Client gesendet wurde; Heraussuchen der APP gemäß der Kaufanfrage, Erzeugen eines Zufallscodes, welcher der APP entspricht, und Speichern in einem Speicher des Servers, des Zufallscodes als den Rücknahmecode der APP in einer Eins-zu-Eins-Entsprechung mit den erlaubten Nutzungszeiten, die in der Kaufanfrage mitgeführt werden, Zurücksenden des Rücknahmecodes der APP an den ersten Client durch eine Kaufantwortnachricht, und Ausführen eines Verschlüsselungsprozesses an der APP, indem eine Technologie einer digitalen Rechteverwaltung verwendet wird; und
das Rücknahmemodul konfiguriert ist zum Empfangen einer Rücknahmeanfrage, die den Rücknahmecode der APP mitführt, die von einem zweiten Client gesendet wurde, und Senden von Download-Informationen der APP, die Entschlüsselungsinformationen der APP mitführen, an den zweiten Client, nach dem ermittelt wurde, dass der Rücknahmecode der APP in der Rücknahmeanfrage übereinstimmt mit einem der Rücknahmecodes der APPs, die in dem Speicher des Servers gespeichert sind, und dass die aktuell genutzten Zeiten der APP, die dem Rücknahmecode der APP entsprechen, nicht größer als die erlaubten Nutzungszeiten sind, die von dem ersten Client eingestellt wurden.

5. System zum Steuern eines Verschenkens einer Anwendung (Englisch: application), umfassend: einen ersten Client, einen Server und einen zweiten Client, wobei
der erste Client umfasst:
ein Einstellmodul, das konfiguriert ist zum Senden von erlaubten Nutzungszeiten einer zu verschenkenden APP und zum Senden der erlaubten Nutzungszeiten der APP an ein Kaufanfragemodul;
wobei das Kaufanfragemodul konfiguriert ist zum Empfangen der erlaubten Nutzungszeiten der APP, die von dem Einstellmodul gesendet wurden, und zum Senden einer Kaufanfrage, welche die erlaubten Nutzungszeiten der APP mitführt, an den Server, zum Empfangen eines Rücknahmecodes der APP, die von dem Server zurückgesendet wurde, und zum Senden des Rücknahmecodes der APP an den zweiten Client;
wobei der Server ein Server nach Anspruch 4 ist; und der zweite Client ein Rücknahmeanfragemodul und ein Download-Modul umfasst, wobei
das Rücknahmeanfragemodul konfiguriert ist zum Empfangen des Rücknahmecodes der APP, der von dem ersten Client gesendet wurde, wobei der erste Client den Rücknahmecode der APP von dem Server empfängt, und Senden der Rücknahmeanfrage, die den Rücknahmecode der APP mitführt, an den Server; und
wobei das Download-Modul konfiguriert ist zum Herunterladen der APP gemäß den Download-Informationen der APP, und zum Senden einer Antwortnachricht, die dem Server das erfolgreiche Herunterladen anzeigt, nachdem die APP erfolgreich heruntergeladen wurde.

6. System nach Anspruch 5, wobei das Download-Modul außerdem konfiguriert ist zum Entschlüsseln der heruntergeladenen APP gemäß den Entschlüsselungsinformationen der APP, die in den Download-Informationen mitgeführt werden.

## Revendications

1. Procédé de commande d'offre d'application, consistant à :
envoyer, par un premier client à un serveur, une demande d'achat transportant des nombres d'utilisation autorisés d'une application (APP) ;
rechercher l'APP, par le serveur, selon la demande d'achat, générer un code aléatoire correspondant à l'APP et stocker, dans un stockage du serveur, le code aléatoire en tant que code de remboursement de l'APP en correspondance un à un avec les nombres d'utilisation autorisés transportés dans la demande d'achat, et renvoyer, par le serveur, le code de remboursement de l'APP au premier client ;
réaliser, par le serveur, un processus de cryptage sur l'APP au moyen d'une technologie de gestion des droits numériques ;
envoyer, par le premier client, le code de remboursement de l'APP à un second client ;
recevoir, par le serveur, une demande de remboursement transportant le code de remboursement de l'APP, envoyée par le second client ; et
envoyer, par le serveur au second client, une information de téléchargement de l'APP transportant une information de décryptage de l'APP, quand il est déterminé que le code de remboursement de l'APP dans la demande de remboursement est conforme à un des codes de remboursement des APP stockées dans le stockage du serveur et que les nombres d'utilisation actuels de l'APP correspondant au code de remboursement de l'APP ne sont pas supérieurs aux nombres d'utilisation autorisés définis par le premier client.

2. Procédé selon la revendication 1, dans lequel la demande d'achat comprend en outre un nom ou une identification de l'APP.

3. Procédé selon la revendication 1, consistant en outre à :
recevoir, par le second client, l'information de téléchargement en provenance du serveur ;
télécharger, par le second client, l'APP selon l'information de téléchargement reçue ; et
décrypter, par le second client, l'APP selon l'information de décryptage de l'APP transportée dans l'information de téléchargement après le téléchargement de l'APP.

4. Serveur, comprenant un module de traitement d'achat et un module de remboursement,
le module de traitement d'achat étant configuré pour recevoir une demande d'achat transportant des nombres d'utilisation autorisés d'une APP, envoyée par un premier client, rechercher l'APP selon la demande d'achat, générer un code aléatoire correspondant à l'APP et stocker, dans un stockage du serveur, le code aléatoire en tant que code de remboursement de l'APP en correspondance un à un avec les nombres d'utilisation autorisés transportés dans la demande d'achat, renvoyer le code de remboursement de l'APP au premier client par l'intermédiaire d'un message de réponse d'achat, et réaliser un processus de cryptage sur l'APP au moyen d'une technologie de gestion des droits numériques ; et
le module de remboursement étant configuré pour recevoir une demande de remboursement transportant le code de remboursement de l'APP, envoyée par un second client, et envoyer au second client une information de téléchargement de l'APP transportant une information de décryptage de l'APP, quand il est déterminé que le code de remboursement de l'APP dans la demande de remboursement est conforme à un des codes de remboursement des APP stockées dans le stockage du serveur et que les nombres d'utilisation actuels de l'APP correspondant au code de remboursement de l'APP ne sont pas supérieurs aux nombres d'utilisation autorisés définis par le premier client.

5. Système de commande d'offre d'application, comprenant : un premier client, un serveur et un second client,
le premier client comprenant :
un module de définition, configuré pour définir des nombres d'utilisation autorisés d'une APP à offrir et envoyer les nombres d'utilisation autorisés de l'APP à un module de demande d'achat ;
le module de demande d'achat, configuré pour recevoir les nombres d'utilisation autorisés de l'APP, envoyés par le module de définition, et envoyer au serveur une demande d'achat transportant les nombres d'utilisation autorisés de l'APP, recevoir un code de remboursement de l'APP renvoyé par le serveur et envoyer le code de remboursement de l'APP au second client ;
le serveur étant un serveur selon la revendication 4 ; et
le second client comprenant un module de demande de remboursement et un module de téléchargement,
le module de demande de remboursement étant configuré pour recevoir le code de remboursement de l'APP, envoyé par le premier client, le premier client recevant le code de remboursement de l'APP en provenance du serveur, et envoyer au serveur la demande de remboursement transportant le code de remboursement de l'APP, et
le module de téléchargement étant configuré pour télécharger l'APP selon l'information de téléchargement de l'APP, et envoyer au serveur un message de réponse indiquant un téléchargement satisfaisant une fois que l'APP est téléchargée de manière satisfaisante.

6. Système selon la revendication 5, dans lequel le module de téléchargement est en outre configuré pour décrypter l'APP téléchargée selon l'information de décryptage de l'APP transportée dans l'information de téléchargement.
